# EUROPEAN PATENT SPECIFICATION

(11) **EP 1 231 798 B1**
(45) Date of publication and mention of the grant of the patent: **24.01.2007**
(21) Application number: 02250803.0
(22) Date of filing: 06.02.2002
(51) Int. Cl.: H04Q 7/22, H04Q 7/32

(54) **Language selecting method and mobile communication system**
Verfahren zur Sprachauswahl und Mobilkommunikationssystem
Procédé de sélection de langue et système de communication mobile

(30) Priority: 07.02.2001 JP 2001031458
(43) Date of publication of application: 14.08.2002
(73) Proprietor: NTT DoCoMo, Inc., Tokyo 100-6150 (JP)
(72) Inventor: Ando, Tomohiro, Yokosuka-shi, Kanagawa 238-0042 (JP)
(74) Representative: Rees, Alexander Ellison

(56) References cited:
- EP-A- 0 966 137
- EP-A- 1 104 978
- WO-A-98/23108

## Description

### BACKGROUND OF THE INVENTION

The present invention generally relates to language selecting methods used in mobile communication systems, and, more particularly, to a language selecting method of selecting a language in which information is transmitted from a service providing apparatus to a mobile station in a mobile communication system that provides various services to mobile stations. The present invention also relates to a mobile communication system that employs the above language selecting method.

In recent years, mobile communication systems that involve mobile terminals, such as portable telephones, have been more and more widely providing answering services and information services including audio and text information of various types, such as traffic information and weather information. When a mobile terminal accesses a service providing apparatus, the service providing apparatus transmits audio information or text information to the mobile terminal. The user of the mobile terminal then listens to the audio information or reads the text information, so as to learn how to utilize the functions given to the terminal or obtain desired information.

When such services are provided, it is essential that the user can understand the language in which the audio information or the text information is supplied. In view of this, a language in which information is transmitted is registered with the service providing apparatus by the user of each mobile terminal. When a mobile terminal accesses the service providing apparatus, with which a language has already been registered, the service providing apparatus transmits audio information and text information in the registered language to the mobile terminal.

It is also often the case that a user wishes to receive information in different languages depending on the types of information, rather than receive all information in only one language. The service providing apparatus, however, transmits information only in a language that has been registered in advance, and it is troublesome for a user to select information in another language. Especially when the registered language cannot be changed in a real-time operation, frequent switching of languages becomes impossible.

Moreover, with the above service providing apparatus of the prior art, a language needs to be registered for each mobile terminal. This causes a problem that, once a language is registered with a mobile terminal such as a public telephone used by a large number of people in general public, those who cannot understand the registered language become unable to utilize the services. In view of these facts, there is an increasing demand for a technique that enables users to frequently switch languages in which information is transmitted to each mobile terminal, without registering a particular language with the service providing apparatus.

One known method of providing information to a mobile telephone user in a language preferred by the user is described in WO-A-9823108. This discloses a method of operating a mobile telephone system in which, when a mobile telephone user travels from one country to another the necessary telephone numbers to access services including a local operator in the new country are automatically downloaded and stored in the mobile telephone. When the mobile telephone user requests access to services by typing in a short code or phrase recognisable by voice recognition software the appropriate stored number to contact the desired service in the current country is dialled. When requesting downloading of the telephone numbers the mobile telephone may send a signal to the local network including a preferred language of the user. The local network will respond by sending as one of the downloaded numbers a number for the local operator which will allow the user to contact a local operator able to speak their preferred language.

Another known method of providing information to a mobile telephone user is disclosed in EP-A-0966137. This discloses a method for updating data stored in a mobile telephone memory which corresponds to text data to be displayed on the mobile telephone. The text data is stored in multiple different languages and the user of the mobile telephone may select which language the stored text messages are displayed in by the mobile telephone. When the text data is amended, usually the amended text data is sent to and stored in the mobile telephone in all available languages. However, if the user wishes to receive the text data in another language which is not one of the normally available languages the user may request that the text data be provided in the users desired language.

Another known method of providing information in a mobile telephone system is disclosed in EP-A-0742676. This discloses a method in which a service providing apparatus transmits information to a mobile telephone in a single language set by the service providing apparatus. The information sent by the service providing apparatus includes a numerical code corresponding to the information. In a first alternative, where the information provided by the service providing apparatus is not in the preferred language of the user, the user sends a message to their home service provider including the numerical code and a preferred language code. The users home service provider then sends the information corresponding to the numerical code back to the mobile telephone in the users preferred language. In a second alternative, where the service providing apparatus identifies the mobile telephone as having a home service provider, the local service providing apparatus can contact the home service provider of the telephone to obtain the desired information in the language preferred by the user and then supplies this information in the users preferred language to the mobile telephone.

A further known method for providing information in a mobile telephone system is disclosed in WO-A-9827759. This discloses a system in which a user can register the preferred language for the mobile telephone with a mobile service switching centre. When voice messages are to be forwarded to the mobile telephone the preferred language registered for the mobile telephone at the mobile service switching centre is checked and the voice message are sent using the registered language.

A known method of selecting service properties in a mobile telephone system is disclosed in WO-A-0004740. This discloses a system in which the same user may use different terminals having different properties. In order to allow desired services to be reliably provided, different implementations are defined for each service for which the terminal requirements differ. The defined implementation of the service to be executed is then selected on the basis of the properties of the terminal used when a service is requested.

### SUMMARY OF THE INVENTION

A general object of the present invention is to provide language selecting methods and mobile communication systems in which the above disadvantages are eliminated.

A more specific object of the present invention is to provide a language selecting method and a mobile communication system by which languages can be frequently switched when information is transmitted to a mobile terminal.

In a first aspect, this invention provides a language selecting method of selecting a language in which information is transmitted from a service providing apparatus to a mobile station in a mobile communication system that includes the mobile station and the service providing apparatus for providing services to the mobile station, which method is characterised by comprising the steps of: transmitting, from the mobile station to the service providing apparatus, language select information for selecting a language in which information is to be received, each time whenever the mobile station starts communication; receiving at the service providing apparatus, the language select information supplied from the mobile station; and transmitting, from the service providing apparatus to the mobile station, information corresponding to the language select information.

In a second aspect, this invention provides a mobile communication system comprising a mobile station and a service providing apparatus for providing services to the mobile station, characterised in that the mobile station comprises a language information transmission unit for transmitting, when starting communication, language select information for selecting a language in which information is to be received, to the service providing apparatus, and the service providing apparatus comprises a language information receiving unit for receiving the language select information from the mobile station, and an information transmitting unit for transmitting information in the language corresponding to the received language select information, to the mobile station.

In a third aspect, this invention provides a mobile station that can receive services supplied from a service providing apparatus comprising: a language select receiving unit for receiving language selection selected by a user; and characterised by further comprising a language information unit for transmitting a language selected by the user, together with a transmission request signal each time whenever the mobile station starts communication.

The above objects of the present invention are achieved by a language selecting method of selecting a language in which information is to be transmitted from a service providing apparatus to a mobile station in a mobile communication system that includes the mobile station and the service providing apparatus for providing various services to the mobile station. In accordance with this language selecting method, the mobile station, each time when starting communication, transmits language select information used for selecting a language in which information is to be received, and the service providing apparatus receives the language select information from the mobile station and then transmits information in the language corresponding to the language select information to the mobile station.

In this language selecting method, every time the mobile station starts communication, the mobile station transmits the language select information for selecting a language in which information is to be received, and the service providing apparatus transmits the information in the language corresponding to the language selecting information to the mobile station. Accordingly, a language can be selected for transmitting information to the mobile station, every time the mobile station starts communication.

In the language selecting method in accordance with the present invention, the mobile station can receive a notification of which language is selected by a user, and transmit language select information corresponding to the language selected by the user to the service providing apparatus.

when a user selects a language in which user information, such as an initial display image to be displayed when the power is turned on and a menu display image, stored beforehand in the mobile station, it is preferable that the user does not need to operate the mobile terminal only for selecting a language in which information is to be transmitted from the service providing apparatus. To achieve this, each language selected by the user is associated with a language in which the information is to be transmitted from the service providing apparatus. This leads to less complicated operations for the user. In view of this, when a language in which user information stored beforehand in the mobile station is selected, the mobile station can transmit the language select information corresponding to the selected language to the service providing apparatus, in accordance with the language selecting method of the present invention.

It is also preferable that a user does not need to select a language every time for receiving information. To reduce the trouble of language selecting by the user, the mobile station can transmit language selecting information stored beforehand therein to the service providing apparatus, in accordance with the language selecting method of the present invention.

Also, in a case where a language select service is classified as an option in a contract, it is preferable that information is transmitted in a selected language only to parties of the contract. To achieve this, the service providing apparatus determines whether information in the language corresponding to received.language select information is transmittable, and transmits the information in the language corresponding to the received language select information to the mobile station only when the information is determined to be transmittable.

The objects of the present invention are also achieved by a mobile communication system to which the language selecting method described above is applied.

The above and other objects and features of the present invention will become more apparent from the following description taken in conjunction with the accompanying drawings.

### BRIEF DESCRIPTION OF THE DRAWINGS

FIG. 1 shows the structure of a mobile communication system in accordance with the present invention;
FIG. 2 shows the structure of a mobile terminal in accordance with the present invention;
FIG. 3 is a sequential diagram of a language selecting process in accordance with the present invention; and
FIG. 4 is a block diagram of a service providing apparatus in accordance with the present invention.

### DESCRIPTION OF THE PREFERRED EMBODIMENTS

The following is a description of embodiments of the present invention, with reference to the accompanying drawings.

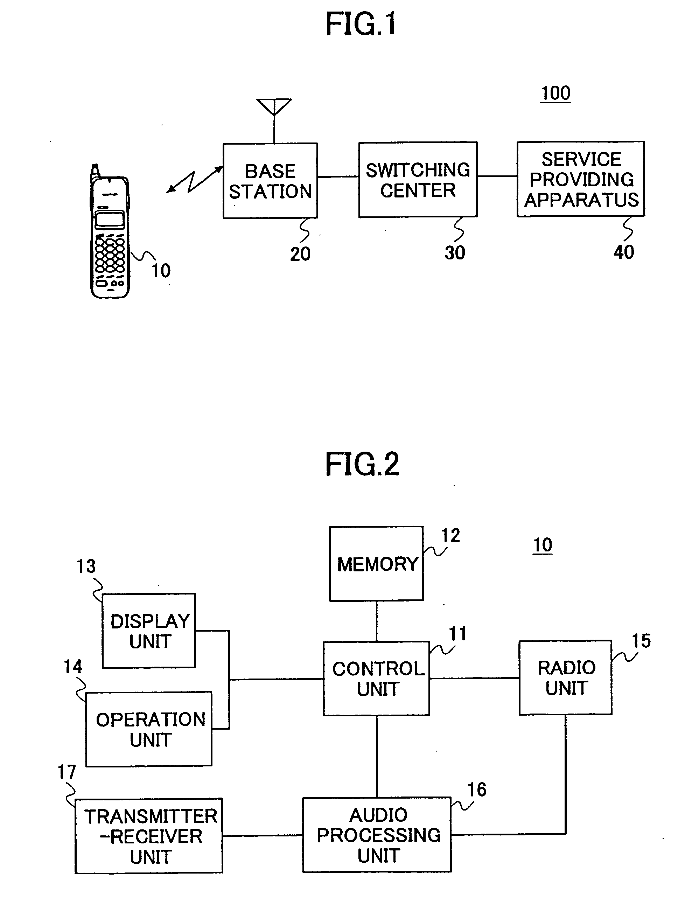

FIG. 1 shows the structure of a mobile communication system to which a language selecting method of the present invention is applied. A mobile communication system 100 includes a mobile terminal 10 such as a cellular phone, a PHS phone etc., a base station 20, a switching center 30, and a service providing apparatus 40.

The mobile communication system 100 selects a language in which information is transmitted from the service providing apparatus 40 to the mobile terminal 10. For example, the service providing apparatus 40 can provide to the mobile terminal 10, audio guidance such as time information and a weather forecast, etc. which are made in a language selected among Japanese, English, French and Chinese, etc. The embodiment described below depicts a case where the mobile terminal starts communication with another mobile terminal, and the service providing apparatus 40 then transmits audio guidance to encourage the user to leave a message, as a message receiving service mode has been set as a part of an answering service mode in the other mobile terminal.

The mobile terminal 10 is a portable device, such as a portable telephone. FIG. 2 shows the structure of the mobile terminal 10. As shown in FIG. 2, the mobile terminal 10 includes a control unit 11, a memory 12, a display unit 13, an operation unit 14, a radio unit 15, an audio processing unit 16, and a transmitter-receiver unit 17.

The control unit 11 controls the entire mobile terminal 10. The memory 12 stores beforehand image data that is formed in various languages. The memory 12 functions as a language storage unit for storing a plurality of languages in which user information is formed. The image data includes initial display data that is displayed when the power is turned on, and menu display data that is displayed in accordance with an operation by a user. Also in accordance with an operation by a user, the control unit 11 sets a predetermined language selected from the languages in which the image data is formed. A user can select his/her favorite language out of prepared languages and input it through the operation unit 14 to the control unit 11. The operation unit 14 and the control unit 11 function as a language information receiving unit. The result of the language setting is stored in the memory 12 as language select information. The memory 12 functions as a language information storage unit for storing a language selected by the user. For example, when Chinese is selected, the initial display in Chinese language appears when turning on the mobile station 10.

In accordance with the language select information obtained in the above manner, the control unit 11 controls the display unit 13 to display the image data in the language selected by the user.

More specifically, after the power of the mobile terminal 10 is turned on, the control unit 11 reads the language select information out of the memory 12, and determines which language has been selected by the user. Among the initial display data stored in the memory 12, the control unit 11 reads the image data formed in the language corresponding to the language select information out of the memory 12, and controls the display unit 13 to display the desired initial display image. When the user operates to display a predetermined menu display image, the control unit 11 reads the language select information out of the memory 12, and recognizes which language has been selected by the user. Among the menu display data stored in the memory 12, the control unit 11 reads the image data formed in the language corresponding to the language select information out of the memory 12, and then controls the display unit 13 to display the desired menu display image.

When the mobile terminal 10 communicates with another mobile terminal, the control unit 11 also generates a transmission request signal to the base station 20, and performs a transmission control operation. The transmission request signal contains the telephone number of the mobile terminal 10 that is the transmission origin mobile terminal, a transmission destination that is the telephone number of the recipient mobile terminal, and language select information (such as a language code) for specifying in which language the audio guidance should be supplied.

The language select information is determined beforehand in accordance with each selected language. The control unit 11 adds the language select information to the transmission request signal, which is then transmitted to the base station 20 via the radio unit 15. The control unit 11 and the radio unit 15 function as a language information transmitting unit. The transmission request signal received by the base station 20 is further transmitted to the service providing apparatus 40 via the switching center 30.

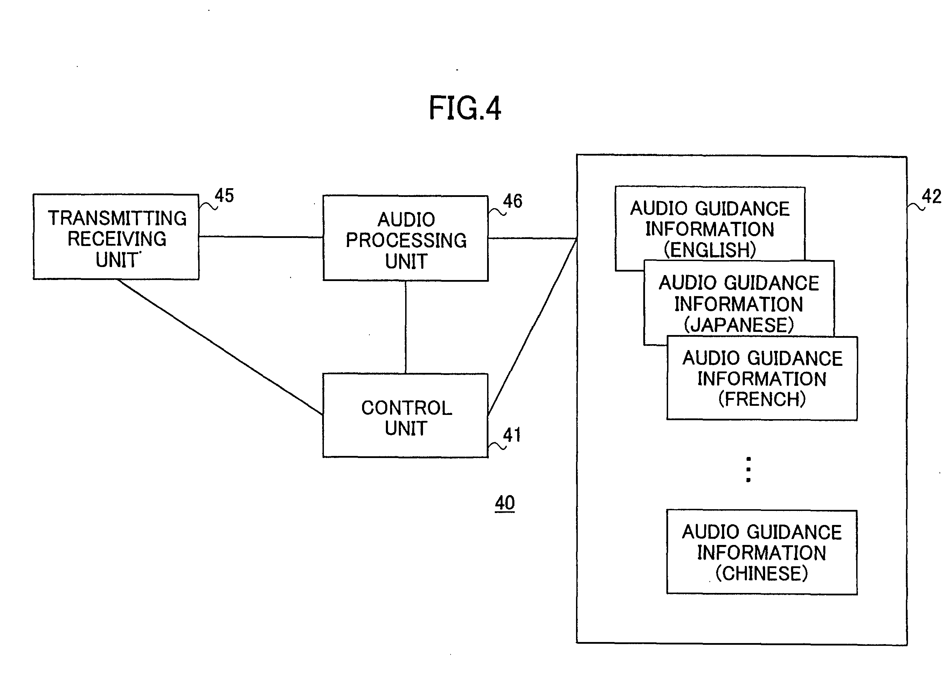

Referring to FIG. 4, the operation of the service providing apparatus 40 is explained below. The service providing apparatus 40 includes a transmitting and receiving unit 45 which receives a transmission request signal from the mobile station and forwarded it to the control unit 41. The control unit 41 determines whether a message receiving service mode as a part of an answering service mode has been set in the transmission destination mobile terminal, based on the telephone number of the transmission destination mobile terminal contained in the transmission request signal.

In compliance with an instruction from the user of each mobile terminal, the service providing apparatus 40 sets a message receiving service mode as a part of an answering service mode. The service providing apparatus 40 then generates and holds a table in which each telephone number is associated with a setting status. By searching the table for a setting status corresponding to the telephone number of the transmission destination mobile terminal, the service providing apparatus 40 determines whether the message receiving service mode has been set in the destination mobile terminal.

If the message receiving service mode has not been set in the transmission destination mobile terminal, the control unit 41 of the service providing apparatus 40 notifies the switching center 30 of the situation. In accordance with the notification, the switching center 30 performs a connecting operation for the transmission destination mobile terminal.

If the message receiving service mode has been set in the transmission destination mobile terminal, the control unit 41 of the service providing apparatus 40 determines whether a contract involving a language select service has been made with respect to the transmission origin mobile terminal 10, based on the telephone number of the transmission origin mobile terminal 10 contained in the transmission request signal.

The service providing apparatus 40 includes a memory 42 which holds a table in which each telephone number is associated with a status regarding the contract involving the language select service. By searching the table for a status corresponding to the telephone number of the transmission origin mobile terminal 10 contained in the transmission request signal, the control unit 41 determines whether the contract involving the language select service has been made with respect to the transmission origin mobile terminal 10. The control unit 41 functions as a transmission determining unit for determining whether the information in the language corresponding to the language select information is transmittable.

If the contract involving the language select service has been made with respect to the transmission origin mobile terminal 10, the control unit 41 determines which language has been selected by the user of the mobile terminal 10, based on the language select information contained in the transmission request signal. The transmitting/receiving unit 45 and the control unit 41 function as a language information receiving unit for receiving language select information from the mobile station. The control unit 41 then reads out from the memory 42 audio guidance information, for instance, "Sorry, I cannot take your call at the moment. Please leave your message after the tone", in the selected language. The read out audio guidance information is coded at an audio processing unit 46 and transmitted by the transmitting/receiving unit 45. The memory 42 and the transmitting/receiving unit 45 function as an information transmitting unit for transmitting information in the language corresponding to the received language select information, to the mobile station.

If the contract involving the language select service has not been made with respect to the transmission origin mobile terminal 10, the service providing apparatus 40 transmits a signal that represents audio guidance in the predetermined language.

The mobile terminal 10 receives the audio guidance signals transmitted via the switching center 30 and the base station 20. Within the mobile terminal 10, the radio unit 15 shown in FIG. 2 receives the audio guidance signal, and the audio processing unit 16 performs an audio decoding operation. As a result, the transmitter-receiver unit 17 outputs the audio guidance.

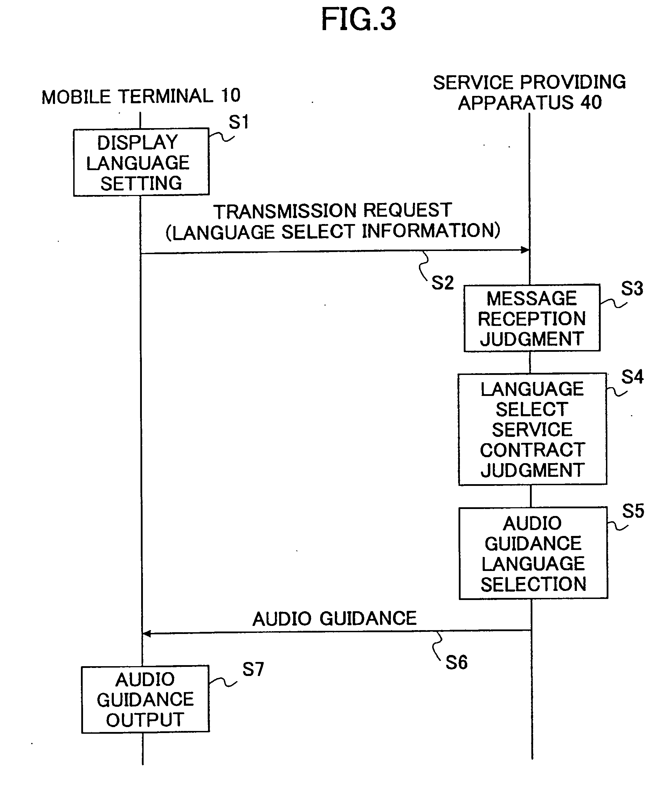

FIG. 3 is a sequential diagram of the language selecting process in the mobile communication system 100.

When a language (for example, English) is selected from the languages in which the image data stored beforehand in the memory 12 is formed, the control unit 11 of the mobile terminal 10 stores the language select information corresponding to English in step S1 of FIG. 3. The control unit 11 reads out English data from memory 12. All user information such as image data and audio guidances become English. When the mobile terminal 10 communicates with another mobile terminal, the control unit 11 performs a control operation to generate a transmission request signal containing the telephone number of the transmission origin mobile terminal 10, the telephone number of the transmission destination mobile terminal, and the language select information, and modulate the transmission request signal and transmit it. The service providing apparatus 40 then receives via the base station 20 and the switching center 30 the transmission request signal from the mobile terminal 10 in step S2.

Based on the telephone number of the transmission destination mobile terminal contained in the transmission request signal, the service providing apparatus 40 determines whether a message receiving service mode has been set as a part of an answering service mode in the transmission destination mobile terminal in step S3.

If the message receiving service mode has been set in the transmission destination mobile terminal, the service providing apparatus 40 determines whether a contract involving a language select service has been made with respect to the transmission origin mobile terminal 10, based on the telephone number of the transmission origin mobile terminal 10 contained in the transmission request signal in step S4.

If the contract involving the language select service has been made with respect to the transmission origin mobile terminal 10, the service providing apparatus 40 recognizes which language has been selected by the user of the mobile terminal 10, based on the language select information contained in the transmission request signal in step S5. The service providing apparatus 40 then transmits a signal representing audio guidance in the language, and the radio unit 15 of the mobile terminal 10 receives the audio guidance signal in step S6. The audio processing unit 16 of the mobile terminal 10 performs an operation, such as an audio decoding operation on the audio guidance signal, and the transmitter-receiver unit 17 outputs the audio guidance in step S7.

As in the manner described so far, when a user selects a language from the languages in which image data stored beforehand in the memory 12 is formed, the mobile terminal 10 of the mobile communication system 100 stores the language select information corresponding to the selected language. When starting communication, the mobile terminal 10 transmits a transmission request signal containing the language select information to the service providing apparatus 40. The service providing apparatus 40 in turn transmits audio guidance in the language corresponding to the language select information contained in the transmission request signal to the mobile terminal 10. In this manner, every time the mobile terminal 10 performs a transmission, the user of the mobile terminal 10 can select a language for the audio guidance from the languages of the image data stored in the memory 12.

Also, when a user selects a language from the languages in which the image data stored beforehand in the memory 12 is formed, the language select information corresponding to the selected language is set in the mobile terminal 10 of the mobile communication system 100. Accordingly, the user does not need to operate the mobile terminal 10 only to select a language in which audio guidance is to be transmitted from the service providing apparatus 40. This makes the entire communication operation less complicated.

Moreover, the mobile terminal 10 of the mobile communication system 100 stores beforehand the language select information in the memory 12. Accordingly, a user does not need to operate the mobile terminal 10 when there is no need to switch language select information. This also leads to less complicated communication operations.

Furthermore, the service providing apparatus 40 of the mobile communication system 100 determines whether a contract involving a language select service has been made with respect to the mobile terminal 10 as a transmission origin mobile terminal. Only in the case where the contract has been made with respect to the mobile terminal 10, can the audio guidance in a selected language be transmitted. Accordingly, the mobile communication system 100 can be applied to a case where a language select service is classified as an option in a contract.

Although the above embodiment has been described by way of example in which a language is selected for supplying audio guidance as a part of an answering service, the present invention is also applicable to information services for providing audio information of various types, such as traffic information, time information and weather information. The present invention is further applicable to a case where language is selected for providing text information as well as audio information.

## Claims

1. A language selecting method of selecting a language in which information is transmitted from a service providing apparatus to a mobile station in a mobile communication system that includes the mobile station and the service providing apparatus for providing services to the mobile station,
which method is comprising the steps of:
transmitting, from the mobile station to the service providing apparatus, language select information for selecting a language in which information is to be received;
receiving, at the service providing apparatus, the language select information supplied from the mobile station; and
transmitting, from the service providing apparatus to the mobile station, information in the language corresponding to the language select information wherein said method is **characterized in that** said language select information is transmitted from the mobile station to the service providing apparatus each time whenever the mobile station starts communication.

2. The language selecting method as claimed in claim 1, further comprising the steps of receiving, at the mobile station, a notification of which language is selected by a user; and
transmitting, from the mobile station to the service providing apparatus, language select information corresponding to the language selected by the user.

3. The language selecting method as claimed in claim 1, further comprising the step of, when a language in which user information is stored beforehand in the mobile station is selected by a user, transmitting language select information corresponding to the language selected by the user, from the mobile station to the service providing apparatus.

4. The language selecting method as claimed in claim 1, further comprising the step of transmitting, from the mobile station to the service providing apparatus, language select information stored in advance.

5. The language selecting method as claimed in claim 1, further comprising the steps of:
determining, at the service providing apparatus, whether the information in the language corresponding to the language select information is transmittable; and
when the information is transmittable, transmitting the information in the language corresponding to the language select information, from the service providing apparatus to the mobile station.

6. A mobile communication system (100) comprising a mobile station (10) and a service providing apparatus (40) for providing services to the mobile station, wherein;
the mobile station comprises a language information transmission unit (11, 15) for transmitting language select information for selecting a language in which information is to be received, to the service providing apparatus, and
the service providing apparatus comprises a language information receiving unit (41, 45) for receiving the language select information from the mobile station, and an information transmitting unit for transmitting information in the language corresponding to the received language select information, to the mobile station , wherein said system is **characterized in that** said mobile station transmits said language select information to said service providing apparatus each time whenever the mobile station starts communication.

7. The mobile communication system as claimed in claim 6, wherein
the mobile station further comprises a language select receiving unit (11, 14) for receiving a notification which language is selected by a user, and
the language information transmission unit transmits language select information corresponding to the language selected by the user to the service providing apparatus.

8. The mobile communication system as claimed in claim 6, wherein, when a language in which user information stored beforehand in the mobile station is selected, the language information transmission unit transmits language select information corresponding to the selected language to the service providing apparatus.

9. The mobile communication system as claimed in claim 6, wherein the language information transmission unit transmits language select information stored in advance to the service providing apparatus.

10. The mobile communication system as claimed in claim 6, wherein
the service providing apparatus further comprises a transmission determining unit for determining whether the information in the language corresponding to the language select information is transmittable, and
the information transmission unit transmits the information in the language corresponding to the language select information to the mobile station, when the information is determined to be transmittable by the transmission determining unit.

11. A mobile station (10) that can receive services supplied from a service providing apparatus (40), comprising:
a language select receiving unit (11, 14) for receiving language selection selected by a user; and
**characterised by** further comprising a language information transmission unit (11, 15) for transmitting a language select information corresponding to the language selected by the user, together with a transmission request signal each time whenever the mobile station starts communication.

12. The mobile station as claimed in claim 11 further comprising:
a language storage unit (12) for storing a plurality of language in which user information is made; and
a language information storage unit (12) for storing the language selected by the user;
whereby transmitting a language select information corresponding to the language stored in the language information unit in advance.

## Patentansprüche

1. Sprachauswahlverfahren zum Auswählen einer Sprache, in der in einem Mobilkommunikationssystem, das eine Mobilstation und eine Dienstbereitstellungsvorrichtung zum Bereitstellen von Diensten an die Mobilstation enthält, Informationen von der Dienstbereitstellungsvorrichtung zur Mobilstation übertragen werden, wobei das Verfahren die Schritte aufweist:
Senden von Sprachauswahlinformationen zum Auswählen einer Sprache, in der Informationen empfangen werden sollen, von der Mobilstation an die Dienstbereitstellungsvorrichtung;
Empfangen der von der Mobilstation zugeführten Sprachauswahlinformationen an der Dienstbereitstellungsvorrichtung; und
Senden von Informationen in der Sprache entsprechend den Sprachauswahlinformationen von der Dienstbereitstellungsvorrichtung an die Mobilstation,
wobei das Verfahren **dadurch gekennzeichnet ist, dass** die Sprachauswahlinformationen von der Mobilstation zur Dienstbereitstellungsvorrichtung jedes Mal übertragen werden, wenn die Mobilstation eine Kommunikation startet.

2. Sprachauswahlverfahren nach Anspruch 1, ferner mit den Schritten:
Empfangen einer Mitteilung, welche Sprache durch einen Benutzer ausgewählt wird, an der Mobilstation; und
Senden von Sprachauswahlinformationen entsprechend der durch den Benutzer ausgewählten Sprache von der Mobilstation an die Dienstbereitstellungsvorrichtung.

3. Sprachauswahlverfahren nach Anspruch 1, ferner mit dem Schritt des Sendens von Sprachauswahlinformationen entsprechend der durch den Benutzer ausgewählten Sprache von der Mobilstation an die Dienstbereitstellungsvorrichtung, wenn eine Sprache, in welcher Benutzerinformationen im Voraus in der Mobilstation gespeichert sind, durch einen Benutzer ausgewählt wird.

4. Sprachauswahlverfahren nach Anspruch 1, ferner mit dem Schritt des Sendens von im Voraus gespeicherten Sprachauswahlinformationen von der Mobilstation an die Dienstbereitstellungsvorrichtung.

5. Sprachauswahlverfahren nach Anspruch 1, ferner mit den Schritten:
Bestimmen an der Dienstbereitstellungsvorrichtung, ob die Informationen in der Sprache entsprechend den Sprachauswahlinformationen übertragbar sind; und
Senden der Informationen in der Sprache entsprechend den Sprachauswahlinformationen von der Dienstbereitstellungsvorrichtung an die Mobilstation, wenn die Informationen sendbar sind.

6. Mobilkommunikationssystem (100) mit einer Mobilstation (10) und einer Dienstbereitstellungsvorrichtung (40) zum Bereitstellen von Diensten an die Mobilstation, bei welchem
die Mobilstation eine Sprachinformationsübertragungseinheit (11, 15) zum Senden von Sprachauswahlinformationen zum Auswählen einer Sprache, in der Informationen empfangen werden sollen, an die Dienstbereitstellungsvorrichtung aufweist, und
die Dienstbereitstellungsvorrichtung eine Sprachinformationsempfangseinheit (41, 45) zum Empfangen der Sprachauswahlinformationen von der Mobilstation und eine Informationsübertragungseinheit zum Senden von Informationen in der Sprache entsprechend den empfangenen Sprachauswahlinformationen an die Mobilstation aufweist,
wobei das System **dadurch kennzeichnet ist, dass** die Mobilstation die Sprachauswahlinformationen jedes Mal an die Dienstbereitstellungsvorrichtung sendet, wenn die Mobilstation eine Kommunikation startet.

7. Mobilkommunikationssystem nach Anspruch 6, bei welchem
die Mobilstation ferner eine Sprachauswahlempfangseinheit (11, 14) zum Empfangen einer Mitteilung, welche Sprache durch einen Benutzer ausgewählt ist, aufweist, und
die Sprachinformationsübertragungseinheit die Sprachauswahlinformationen entsprechend der durch den Benutzer ausgewählten Sprache an die Dienstbereitstellungsvorrichtung sendet.

8. Mobilkommunikationssystem nach Anspruch 6, bei welchem, wenn eine Sprache, in der Benutzerinformationen im Voraus in der Mobilstation gespeichert sind, ausgewählt wird, die Sprachinformationsübertragungseinheit Sprachauswahlinformationen entsprechend der ausgewählten Sprache an die Dienstbereitstellungsvorrichtung sendet.

9. Mobilkommunikationssystem nach Anspruch 6, bei welchem die Sprachinformationsübertragungseinheit im Voraus gespeicherte Sprachauswahlinformationen an die Dienstbereitstellungsvorrichtung sendet.

10. Mobilkommunikationssystem nach Anspruch 6, bei welchem
die Dienstbereitstellungsvorrichtung weiter eine Übertragungsbestimmungseinheit zum Bestimmen, ob die Informationen in der Sprache entsprechend den Sprachauswahlinformationen sendbar sind, aufweist, und
die Informationsübertragungseinheit die Informationen in der Sprache entsprechend den Sprachauswahlinformationeii an die Mobilstation sendet, wenn die Informationen durch die Übertragungsbestimmungseinheit als sendbar bestimmt werden.

11. Mobilstation (10), die von einer Dienstbereitstellungsvorrichtung (40) zugeführte Dienste empfangen kann, mit einer Sprachauswahlempfangseinheit (11, 14) zum Empfangen einer durch einen Benutzer ausgewählten Sprachauswahl, und weiter **gekennzeichnet durch** eine Sprachinformationsübertragungseinheit (11, 15) zum Senden von Sprachauswahlinformationen entsprechend der durch den Benutzer ausgewählten Sprache zusammen mit einem Übertragungsanforderungssignal, jedes Mal, wenn die Mobilstation eine Kommunikation startet.

12. Mobilstation nach Anspruch 11, ferner mit
einer Sprachspeichereinheit (12) zum Speichern mehrerer Sprachen, in denen Benutzerinformationen erstellt sind; und
einer Sprachinformationsspeichereinheit (12) zum Speichern der durch den Benutzer ausgewählten Sprache,
wobei Sprachauswahlinformationen entsprechend der im Voraus in der Sprachinformationseinheit gespeicherten Sprache übertragen werden.

## Revendications

1. Procédé de sélection de langue pour sélectionner une langue dans laquelle des informations sont transmises depuis un appareil fournisseur de services vers une station mobile dans un système de communication mobile qui inclue la station mobile et l'appareil fournisseur de services pour fournir des services à la station mobile,
lequel procédé comprend les étapes consistant à :
transmettre, depuis la station mobile vers l'appareil fournisseur de services, des informations de sélection de langue pour sélectionner une langue dans laquelle les informations doivent être reçues ;
recevoir, au niveau de l'appareil fournisseur de services, les informations de sélection de langue fournies par la station mobile ; et
transmettre, depuis l'appareil fournisseur de services vers la station mobile, des informations dans la langue correspondant aux informations de sélection de langue, dans lequel ledit procédé est **caractérisé en ce que** lesdites informations de sélection de langue sont transmises depuis la station mobile vers l'appareil de fourniture de services chaque fois que la station mobile commence une communication.

2. Procédé de sélection de langue selon la revendication 1, comprenant en outre les étapes consistant à recevoir, au niveau de la station mobile, une notification de la langue qui est sélectionnée par un utilisateur ; et
transmettre, depuis la " station mobile vers l'appareil fournisseur de services, des informations de sélection de langue correspondant à la langue sélectionnée.

3. Procédé de sélection de langue selon la revendication 1, comprenant en outre'l'étape consistant à, quand un utilisateur sélectionne une langue dans laquelle des informations d'utilisateur sont mémorisées préalablement dans la station mobile, transmettre des informations de sélection de langue correspondant à la langue sélectionnée par l'utilisateur, depuis la station mobile vers l'appareil fournisseur de services.

4. Procédé de sélection de langue selon la revendication 1, comprenant en outre l'étape de transmission, depuis la station mobile vers l'appareil fournisseur de services, d'informations de sélection de langue mémorisées préalablement.

5. Procédé de sélection de langue selon la revendication 1, comprenant en outre les étapes consistant à :
déterminer, au niveau de l'appareil fournisseur de services, si les informations dans la langue correspondant aux informations de sélection de langue peuvent être transmises ; et
quand les informations peuvent être transmises, transmettre les informations dans la langue correspondant aux informations de sélection de langue, depuis l'appareil fournisseur de services vers la station mobile.

6. Système de communication mobile (100) comprenant une station mobile (10) et un appareil fournisseur de services (40) pour fournir des services à la station mobile, dans lequel :
la station mobile comprend une unité de transmission d'informations de langue (11, 15) pour transmettre des informations de sélection de langue pour sélectionner une langue dans laquelle les informations doivent être reçues, à l'appareil fournisseur de services, et
l'appareil fournisseur de services comprend une unité de réception d'informations de langue (41, 45) pour recevoir les informations de sélection de langue fournies par la station mobile, et une unité de transmission d'informations pour transmettre des informations dans la langue correspondant aux informations de sélection de langue reçues, à la station mobile, dans lequel ledit système est **caractérisé en ce que** ladite station mobile transmet lesdites informations de sélection de langue audit appareil de fourniture de services chaque fois que la station mobile commence une communication.

7. Système de communication mobile selon la revendication 6, dans lequel
la station mobile comprend en outre une unité de réception de sélection de langue (11, 14) pour recevoir une notification de la langue qui est sélectionnée par un utilisateur, et
l'unité de transmission d'informations de langue transmet des informations de sélection de langue correspondant à la langue sélectionnée par l'utilisateur à l'appareil fournisseur de services.

8. Système de communication mobile selon la revendication 6, dans lequel, quand une langue dans laquelle des informations d'utilisateur sont mémorisées préalablement dans la station mobile est sélectionnée, l'unité de transmission d'informations de langue transmet des informations de sélection de langue correspondant à la langue sélectionnée à l'appareil fournisseur de services.

9. Système de communication mobile selon la revendication 6, dans lequel l'unité de transmission d'informations de langue transmet des informations de sélection de langue mémorisées préalablement à l'appareil fournisseur de services.

10. Système de communication mobile selon la revendication 6, dans lequel
l'appareil fournisseur de services comprend en outre une unité de détermination de transmission pour déterminer si les informations dans la langue correspondant aux informations de sélection de langue peuvent être transmises ; et
l'unité de transmission d'informations transmet les informations dans la langue correspondant aux informations de sélection de langue à la station mobile, quand l'unité de détermination de transmission a déterminé que les informations peuvent être transmises.

11. Station mobile (10) qui peut recevoir des services fournis par un appareil fournisseur de services (40), comprenant :
une unité de réception de sélection de langue (11, 14) pour recevoir une sélection de langue sélectionnée par un utilisateur ; et
**caractérisée par le fait qu'**elle comprend en outre une unité de transmission d'informations de langue (11, 15) pour transmettre des informations de sélection de langue correspondant à la langue sélectionnée par l'utilisateur, avec un signal de requête de transmission chaque fois que la station mobile commence une communication.

12. Station mobile selon la revendication 11, comprenant en outre :
une unité de mémorisation de langue (12) pour mémoriser une pluralité de langues dans lesquelles des informations d'utilisateur sont produites ; et
une unité de mémorisation d'informations de langue (12) pour mémoriser la langue sélectionnée par l'utilisateur ;
transmettant des informations de sélection de langue correspondant à la langue mémorisée dans l'unité d'informations de langue préalablement.
